# FASCICULE DE BREVET EUROPEEN

(11) **EP 2 885 525 B1**
(45) Date de publication et mention de la délivrance du brevet: **19.07.2017**
(21) Numéro de dépôt: 13762172.8
(22) Date de dépôt: 13.08.2013
(51) Int. Cl.: F02K 9/95

(54) **ALLUMEUR BIMODAL ET PROCEDE D'INJECTION BIMODALE POUR ALLUMEUR DE MOTEUR-FUSEE**
BIMODALER ZÜNDER UND EINSPRITZVERFAHREN FÜR EINEN RAKETENTRIEBWERKSZÜNDER
BIMODAL IGNITER AND INJECTION METHOD FOR A ROCKET ENGINE IGNITER

(30) Priorité: 20.08.2012 FR 1257878
(43) Date de publication de la demande: 24.06.2015
(73) Titulaire: Airbus Safran Launchers SAS, 75015 Paris (FR); Centre National d'Etudes Spatiales (CNES), 75001 Paris (FR)
(72) Inventeur: LE CRAS, Jean-Luc, F-27950 Saint-Marcel (FR); VERPLANCKE,Cyril, F-92600 Asnieres-sur-Seine (FR)
(74) Mandataire: Joanny, Damien Henri Xavier
(86) Numéro de dépôt international: PCT/FR2013/051932
(87) Numéro de publication internationale: WO 2014/029937

(56) Documents cités:
- FR-A1- 2 827 641
- FR-A1- 2 916 485
- US-A- 3 062 004
- US-A1- 2002 026 788

## Description

### DOMAINE DE L'INVENTION

Le présent exposé concerne un allumeur bimodal et un procédé d'injection bimodale pour allumeur aptes à démarrer un moteur-fusée aussi bien en régime basse pression qu'en régime haute pression.

Un tel allumeur ou procédé peut être utilisé pour permettre le démarrage ou le redémarrage d'un moteur-fusée dans différentes conditions de fonctionnement et de régimes de pression, au sol ou en vol, à basse altitude ou à haute altitude.

### ETAT DE LA TECHNIQUE ANTERIEURE

Les moteurs-fusées fonctionnent en provoquant la rencontre et la combustion de deux ergols, très généralement de l'oxygène et de l'hydrogène, au sein d'une chambre de combustion : ce sont les gaz brûlés générés par cette combustion et s'échappant à très haute vitesse hors de la chambre de combustion, le plus souvent via un divergent ou une tuyère, qui, par réaction, produisent la poussée propulsant la fusée.

Une telle combustion, une fois démarrée, s'auto-entretient tant que l'alimentation en ergols est maintenue. Toutefois, le démarrage d'un tel moteur, mettant en oeuvre de gros volumes d'ergols, nécessite une grande quantité d'énergie pour initier la combustion, quantité d'énergie qu'une simple bougie ne pourrait fournir. Ainsi, les moteurs-fusées sont équipés d'allumeurs permettant d'initier la réaction de combustion dans la chambre de combustion du moteur. Le document FR2827641 décrit un tel allumeur.

Parmi ces allumeurs, on connait les allumeurs torches qui, contrairement aux allumeurs pyrotechniques, sont réutilisables et permettent donc un éventuel redémarrage du moteur en vol. Un tel allumeur torche consiste en une petite chambre de combustion alimentée en ergols et munie d'une bougie capable d'enflammer la petite quantité d'ergols alimentée : les flammes ainsi générées sont alors canalisées sous la forme d'une torche vers la chambre de combustion du moteur et sont suffisamment énergétiques pour y initier la combustion et démarrer le moteur.

Toutefois, à ce jour, seuls deux types d'allumeurs torches sont connus, chacun ne possédant qu'un seul point de fonctionnement. Il existe tout d'abord des allumeurs basse pression, alimentés en ergols pressurisés à la faible pression des réservoirs : malheureusement, ces derniers se retrouvent déficients dès lors qu'une contre-pression est présente dans la chambre de combustion, c'est-à-dire notamment au sol et à basse altitude. Ils dégagent en outre assez peu d'énergie et peuvent donc potentiellement échouer à démarrer le moteur et demander plusieurs tentatives avant le démarrage effectif du moteur. Il existe également des allumeurs haute-pression dans lesquels les ergols sont stockés dans des réservoirs pressurisés à haute pression. Toutefois, ces derniers sont lourds et donc très coûteux.

Il existe donc un réel besoin pour un allumeur bimodal et un procédé d'injection bimodale pour allumeur, pour le démarrage d'un moteur-fusée aussi bien en régime basse pression qu'en régime haute pression, et qui soient dépourvus des inconvénients inhérents aux allumeurs connus précités.

### PRESENTATION DE L'INVENTION

Le présent exposé concerne un allumeur bimodal pour moteur-fusée selon la revendication 1 apte à fonctionner en régime basse pression ou en régime haute pression ; il comprend une alimentation en un premier ergol, une alimentation en un deuxième ergol, une alimentation en un fluide haute pression, un premier réservoir tampon, un deuxième réservoir tampon, un premier dispositif de commutation, un deuxième dispositif de commutation, et une chambre de combustion formant torche ; un orifice aval du premier réservoir tampon d'une part et un orifice aval du deuxième réservoir tampon d'autre part débouchent dans la chambre de combustion, et le premier dispositif de commutation, respectivement le deuxième dispositif de commutation, est configuré pour connecter un orifice amont du premier réservoir tampon, respectivement un orifice amont du deuxième réservoir tampon, avec soit l'alimentation en un premier ergol, respectivement l'alimentation en un deuxième ergol, soit l'alimentation en un fluide haute pression.

Dans le présent exposé, on nomme l'amont et l'aval en référence à l'écoulement des fluides, ergols ou fluide haute pression, depuis leurs réservoirs jusqu'à la chambre de combustion.

Ainsi, en fonctionnement basse pression, les ergols s'écoulent depuis leurs réservoirs d'alimentation où ils sont stockés à basse pression, traversent leur réservoir tampon respectif, et se déversent dans la chambre de combustion de l'allumeur où ils se mélangent ; le mélange d'ergols est alors enflammé, ce qui crée une torche apte à initier la combustion des ergols dans la chambre de combustion principale du moteur-fusée. Ce fonctionnement basse pression est particulièrement adapté aux allumages ou rallumages en vol à haute altitude lorsque le vide, ou tout au moins une faible contre-pression, règne dans la chambre de combustion du moteur-fusée et donc dans la chambre de combustion de l'allumeur.

A l'inverse, au sol, au décollage ou au banc d'essai, ou lorsque la chambre vient de s'allumer, une contre-pression règne dans la chambre de combustion du moteur et donc dans celle de l'allumeur : cette contre-pression s'exerce alors à l'encontre des ergols à basse pression et peut entraver, partiellement ou entièrement, leur injection dans la chambre de combustion de l'allumeur rendant ainsi l'allumage incertain. En particulier, la contre pression devient effective et forte lorsque la chambre de combustion du moteur est allumée, ce qui perturbe le fonctionnement basse pression de l'allumeur qui devient alors moins efficace pour maintenir la combustion dans la chambre lors de la phase transitoire critique et peu stable de la combustion qui perdure quelque temps après l'allumage. Dès lors, en fonctionnement haute pression, on utilise un fluide haute pression que l'on injecte dans le réservoir tampon à la suite de l'ergol qui y était préalablement présent pour pressuriser ce dernier et le pousser jusque dans la chambre de combustion de l'allumeur, et ceci malgré la force exercée par la contre-pression qui y règne. L'allumage du moteur est donc également assuré dans ces conditions nécessitant un fonctionnement haute pression.

Ainsi, grâce à l'architecture de la présente invention, il est possible d'obtenir un allumeur offrant deux points de fonctionnement, un en basse pression, l'autre en haute pression, et donc capable de s'adapter, avec une architecture unique et compacte, aux conditions variées rencontrées par le moteur-fusée lors de sa mission. En particulier, cette architecture permet d'utiliser dans les deux modes de fonctionnement une même alimentation basse pression en ergols qui peuvent d'ailleurs également correspondre aux sources d'alimentation du moteur-fusée lui-même. En outre, il devient ainsi inutile d'embarquer des réservoirs d'ergols pressurisés distincts, particulièrement lourds et encombrants, pour permettre le fonctionnement haute-pression.

Dans certains modes de réalisation, le fluide haute pression est un fluide de purge de l'allumeur. En effet, dans un moteur-fusée classique, un réservoir pressurisé de fluide de purge est souvent prévu pour permettre la purge de certaines canalisations et notamment, dans le cas d'un allumeur, des conduites d'amenée des ergols. Dans un tel mode de réalisation, il est alors possible de profiter de l'existence d'un tel réservoir de fluide de purge haute pression pour disposer d'une alimentation en fluide haute pression adaptée à la présente invention sans embarquer un nouveau réservoir pressurisé : la masse du moteur est donc sensiblement inchangée ce qui limite grandement son coût. En outre, par le principe même de ce mode de réalisation qui injecte le fluide de purge directement à la suite des ergols, la purge a lieu immédiatement, sans temps de latence, ce qui réduit le risque de surchauffe à l'arrêt de l'allumeur.

Dans certains modes de réalisation, le fluide haute pression est non réactif. Son injection est donc neutre du point de vue de l'allumeur. En particulier, il ne risque pas de réagir avec l'un des ergols et donc de parasiter la réaction de combustion entre les ergols ou encore d'endommager l'allumeur. Il est également choisi pour ne pas réagir avec les matériaux de l'allumeur notamment par corrosion, oxydation ou réduction. Ce fluide haute pression est ainsi préférentiellement du diazote N2 ou de l'hélium He.

Dans certains modes de réalisation, le premier réservoir tampon est une conduite d'amenée du premier ergol à la chambre de combustion. La concomitance des fonctions d'acheminement des ergols d'une part et de leur stockage tampon d'autre part permet une architecture compacte et légère.

Dans certains modes de réalisation, le deuxième réservoir tampon est une conduite d'amenée du deuxième ergol à la chambre de combustion.

Dans certains modes de réalisation, les volumes respectifs des réservoirs tampons ont été configurés pour maintenir, lors du fonctionnement haute pression, un rapport de mélange souhaité durant une durée suffisante pour permettre l'allumage. Le volume des réservoirs tampons déterminent en effet les quantités respectives d'ergols qui seront injectées durant l'allumage et donc le rapport de mélange. En jouant sur le volume de chaque réservoir tampon, notamment sur sa longueur et/ou sa section s'il s'agit d'une conduite, il est ainsi possible de régler le rapport de mélange et donc le point de fonctionnement de l'allumeur, un tel réglage étant impossible dans un allumeur basse-pression classique qui injecte chaque ergol avec des débits calibrés fixes.

Dans certains modes de réalisation, le rapport de mélange souhaité est compris entre 1,5 et 3,5, de préférence entre 2 et 3, de préférence encore environ égal à 2,5.

Dans certains modes de réalisation, le rapport de mélange souhaité est maintenu au moins durant 0,3 s, de préférence au moins durant 0,5 s, de préférence encore au moins durant 1 s.

Dans certains modes de réalisation, la première conduite d'amenée possède un volume compris entre 0,5 et 2,5 l, de préférence entre 0,8 et 2 l, de préférence encore égal à environ 1,6 l.

Dans certains modes de réalisation, la deuxième conduite d'amenée possède un volume compris entre 0,08 et 0,39 l, de préférence entre 0,13 et 0,31 l, de préférence encore égal à 0,26 l. Dans certains modes de réalisation, le premier dispositif de commutation comprend un clapet anti-retour disposé en sortie de l'alimentation en premier ergol pour interrompre l'alimentation en ergol lors du l'alimentation en fluide haute pression. Ce clapet permet l'interruption automatique et instantanée de l'alimentation en premier ergol lorsque le fluide haute pression, dont la pression est naturellement plus importante que l'ergol, est libéré. En outre, il évite que du fluide haute pression ne soit refoulé dans l'alimentation en ergol.

Dans certains modes de réalisation, le deuxième dispositif de commutation comprend un clapet anti-retour disposé en sortie de l'alimentation en deuxième ergol pour interrompre l'alimentation en ergol lors du l'alimentation en fluide haute pression.

Dans certains modes de réalisation, le premier dispositif de commutation comprend une électrovanne commandant l'alimentation en fluide haute pression vers le premier réservoir tampon.

Dans certains modes de réalisation, le deuxième dispositif de commutation comprend une électrovanne commandant l'alimentation en fluide haute pression vers le deuxième réservoir tampon.

Dans certains modes de réalisation, le premier dispositif de commutation comprend un deuxième clapet anti-retour disposé en sortie de l'alimentation en fluide haute pression pour empêcher le premier ergol de refluer vers l'alimentation en fluide haute pression.

Dans certains modes de réalisation, le deuxième dispositif de commutation comprend un deuxième clapet anti-retour disposé en sortie de l'alimentation en fluide haute pression pour empêcher le deuxième ergol de refluer vers l'alimentation en fluide haute pression.

Dans certains modes de réalisation, l'alimentation en fluide haute pression comprend un premier détendeur configuré pour régler la pression du fluide haute pression lorsqu'il alimente le premier réservoir tampon. De cette manière, il est possible de régler la pression d'injection de l'ergol présent dans le réservoir tampon lors de l'injection du fluide haute pression et donc de régler le débit d'injection de l'ergol et le point de fonctionnement de l'allumeur.

Dans certains modes de réalisation, l'alimentation en fluide haute pression comprend un deuxième détendeur configuré pour régler la pression du fluide haute pression lorsqu'il alimente le deuxième réservoir tampon.

Dans certains modes de réalisation, les alimentations en premier et deuxième ergols sont les réservoirs d'ergol du moteur-fusée lui-même. Il est ainsi possible de mutualiser ces alimentations et donc de gagner en compacité et en masse.

Dans certains modes de réalisation, le premier ergol est du dihydrogène gazeux (GH2) et le deuxième ergol est du dioxygène gazeux (GOx).

Dans certains modes de réalisation, le fluide haute pression est fourni à une pression supérieure à 10 bars, de préférence supérieure à 20 bars. De cette manière, on parvient à découpler le fonctionnement de l'allumeur avec la pression régnant dans la chambre, même une fois la chambre allumée en début de phase transitoire d'accroissement de pression.

Selon la revendication 7, le présent exposé concerne également un procédé d'injection bimodale à basse pression ou à haute pression d'un ergol dans une chambre de combustion, formant torche, d'un allumeur d'un moteur-fusée. Il comprend les étapes suivantes : en mode basse pression, on alimente la chambre de combustion de l'allumeur en ergol prélevé dans un réservoir basse pression ; en mode haute pression, on stocke préalablement de l'ergol dans un réservoir tampon puis on injecte du fluide haute pression à la suite de l'ergol préalablement stocké pour pressuriser ce dernier et le refouler à haute pression vers la chambre de combustion.

On obtient ainsi, entre autres avantages, les avantages de l'allumeur bimodal décrit ci-dessus.

Dans certains modes de mise en oeuvre, le fluide haute pression est un fluide de purge de l'allumeur, de préférence un fluide non réactif tel du diazote ou de l'hélium.

Dans certains modes de mise en oeuvre, on utilise le volume formé par une conduite d'amenée de l'ergol à la chambre de combustion pour constituer le réservoir tampon.

Dans certains modes de mise en oeuvre, le dimensionnement de ladite conduite d'amenée a été prévu pour maintenir un débit d'ergol souhaité durant une durée suffisante pour permettre l'allumage.

Enfin, le présent exposé concerne également un moteur-fusée comprenant un allumeur tel que décrit ci-dessus et/ou mettant en oeuvre le procédé décrit ci-dessus.

Les caractéristiques et avantages précités, ainsi que d'autres, apparaîtront à la lecture de la description détaillée qui suit, d'exemples de réalisation de l'allumeur et du procédé proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une représentation schématique en plan d'un exemple d'allumeur selon l'invention en fonctionnement basse pression.
La FIG 2 est une représentation schématique en plan de l'allumeur de la FIG 1 en fonctionnement haute pression.

### DESCRIPTION DETAILLEE D'EXEMPLE(S) DE REALISATION

Afin de rendre plus concrète l'invention, un exemple d'allumeur lest décrit en détail ci-après, en référence aux dessins annexés. Il est rappelé que l'invention ne se limite pas à cet exemple.

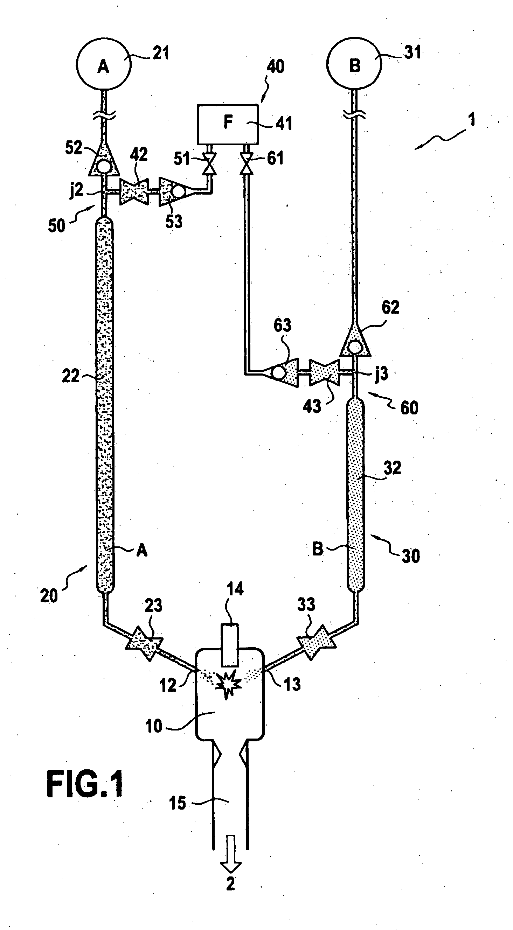

La FIG 1 présente un exemple de réalisation d'un allumeur 1 selon l'invention. Ce dernier est composé d'une chambre de combustion 10, d'une première ligne d'alimentation 20 en un premier ergol A, ici de l'hydrogène gazeux GH2, d'une deuxième ligne d'alimentation 30 en un deuxième ergol B, ici de l'oxygène gazeux GOx, et d'un équipement de purge 40.

La chambre de combustion 10 comprend une arrivée de premier ergol 12 au niveau de laquelle débouche la ligne d'alimentation 20 en premier ergol A, une arrivée de deuxième ergol 13 au niveau de laquelle débouche la ligne d'alimentation 30 en deuxième ergol B, une bougie 14, disposée au sein de la chambre de combustion 10 de manière à être sensiblement à la confluence des flux d'ergols A et B pénétrant dans la chambre 10 par les arrivées 12 et 13, et un canal 15 s'étendant depuis cette zone de confluence vers la chambre de combustion 2 du moteur-fusée.

La ligne d'alimentation 20 en premier ergol A comprend quant à elle un réservoir d'alimentation 21 en premier ergol A, une conduite d'amenée 22 formant réservoir tampon, et un dispositif de calibrage 23, fonctionnant ici en col sonique, disposé en aval de la ligne d'alimentation 20 avant que celle-ci ne débouche dans la chambre de combustion 10 par l'arrivée 12.

De même, la ligne d'alimentation 30 en deuxième ergol B comprend un réservoir d'alimentation 31 en premier ergol B, une conduite d'amenée 32 formant réservoir tampon, et un dispositif de calibrage 33, fonctionnant également en col sonique, disposé en aval de la ligne d'alimentation 30 avant que celle-ci ne débouche dans la chambre de combustion 10 par l'arrivée 13.

Dans cet exemple de réalisation, les réservoirs d'alimentation 21 et 31 sont également ceux alimentant en ergol la chambre de combustion principale 2 du moteur-fusée lui-même. L'hydrogène gazeux A et l'oxygène gazeux B y sont disponibles à une pression d'environ 3 bar.

L'équipement de purge 40 comprend quant à lui un réservoir pressurisé 41 d'un fluide haute pression F de purge, ici du diazote gazeux N2 (il pourrait également s'agir d'hélium). Ce dernier est connecté à la ligne d'alimentation 20 en premier ergol A en un point de jonction j2, situé en amont de la conduite d'amenée 22 formant réservoir tampon, au niveau d'un premier dispositif de commutation 50. Il est également connecté à la ligne d'alimentation 30 en deuxième ergol B en un point de jonction j3, situé en amont de la conduite d'amenée 32 formant réservoir tampon, au niveau d'un deuxième dispositif de commutation 60. En outre, l'équipement de purge 40 comprend un premier dispositif de calibrage 42, respectivement un deuxième dispositif de calibrage 43, disposé avant le point de jonction j2 avec la première ligne d'alimentation 20, respectivement avant le point de jonction j3 avec la deuxième ligne d'alimentation 30.

Dans cet exemple de réalisation, le réservoir de fluide haute pression 41 est le réservoir d'azote commun de la fusée. Il fournit une alimentation en fluide haute pression à une pression d'environ 300 bars, cette pression pouvant être réduite pour les besoins du présent allumeur 1 à une pression de l'ordre de 25 bars.

Ainsi, dans cet exemple de réalisation, le réservoir de fluide haute pression 41 est commun pour les deux lignes d'alimentations 20 et 30 ; toutefois, dans d'autres exemples de réalisation, l'équipement de purge peut comprendre un premier réservoir de fluide haute pression destiné à la première ligne d'alimentation 20 et un deuxième réservoir de fluide haute pression destiné à la deuxième ligne d'alimentation 30.

Le premier dispositif de commutation 50 comprend une vanne 51, un premier clapet anti-retour 52 et un deuxième clapet anti-retour 53. La vanne 51, ici du type électrovanne, est disposée entre le réservoir pressurisé de fluide haute pression 41 et le point de jonction j2 : elle permet de commander l'alimentation en fluide haute pression F. Le premier clapet anti-retour 52 est disposé entre le point de jonction j2 et le réservoir d'alimentation en premier ergol 21 : il est dirigé de manière à se fermer lorsque le fluide haute pression F circule dans la première ligne d'alimentation 20. Dans un tel cas, l'alimentation en premier ergol A est coupée et le fluide haute pression F est empêché de refluer vers le réservoir d'alimentation 21. Le deuxième clapet anti-retour 52 est quant à lui disposé entre le point de jonction j2 et la vanne 51 : il est dirigé de manière à se fermer lorsque le fluide haute pression F ne circule pas dans la première ligne d'alimentation 20, lorsque la vanne 51 est fermée notamment. Dans un tel cas, le premier ergol A est empêché de refluer au-delà du clapet 53.

Le deuxième dispositif de commutation 60 comprend une vanne 61, un premier clapet anti-retour 62 et un deuxième clapet anti-retour 63. Leurs positionnements et leurs fonctions sont en tous points analogues, pour la deuxième ligne d'alimentation 30, à ceux du premier dispositif de commutation 50.

Dans une variante de réalisation, l'équipement de purge 40 peut être muni d'une unique vanne commandant l'alimentation en fluide haute pression F vers les deux lignes d'alimentations 20 et 30, la bifurcation vers ces deux lignes 20 et 30 pouvant être prévue après ladite vanne.

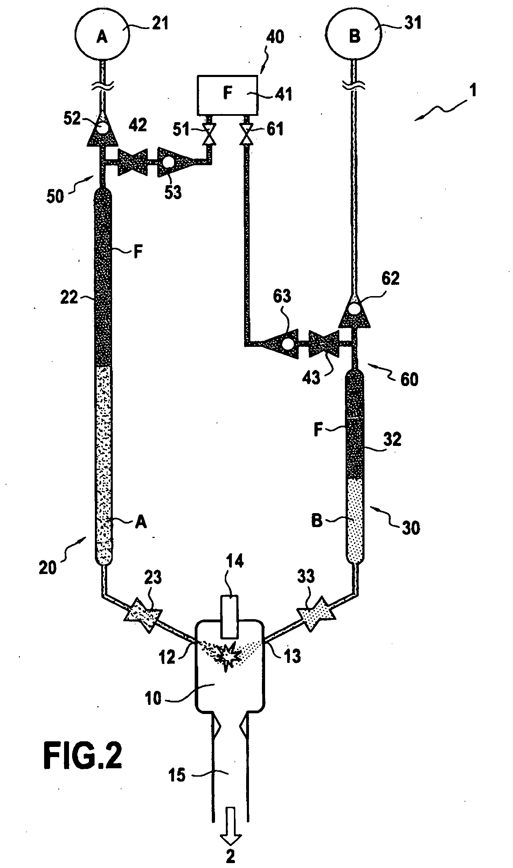

Le fonctionnement de l'allumeur 1 va maintenant être décrit en référence aux FIGS 1 et 2 illustrant respectivement les régimes basse et haute pression.

Lorsque la pression régnant dans la chambre de combustion 2 du moteur-fusée, et donc dans la chambre de combustion 10 de l'allumeur 1, est négligeable ou tout au moins faible devant la pression des ergols A et B contenus dans les réservoirs 21 et 31, ici de l'ordre de 3 bar, on utilise l'allumeur 1 en mode basse pression tel que cela est représenté sur la FIG 1.

Dans ce mode basse pression, les vannes 51 et 61 du fluide de purge F sont fermées et on alimente les lignes d'alimentation 20 et 30 avec les ergols A et B contenus dans les réservoirs d'alimentation 21 et 31 : les ergols A et B traversent donc respectivement les clapets 52 et 62, repoussent et ferment les clapets 53 et 63, circulent dans leurs conduites d'amenées respectives 22 et 32, franchissent les détendeurs 23, 33 et sont injectés dans la chambre de combustion 10 par les arrivées 12 et 13. La bougie 14 provoque alors une étincelle électrique qui enflamme le mélange d'ergols A et B présent dans la chambre de combustion 10 de l'allumeur 1 : les flammes ainsi produites sont alors dirigées par le canal 15 de la chambre 10 vers la chambre de combustion 2 du moteur-fusée pour y allumer la réaction de combustion.

En revanche, lorsque la pression régnant dans la chambre de combustion 2 du moteur-fusée, et donc dans la chambre de combustion 10 de l'allumeur 1, est suffisamment élevée pour exercer une contre-pression susceptible de s'opposer à l'injection conventionnelle des ergols A et B dans la chambre de combustion 10, on utilise l'allumeur 1 en mode haute pression tel que cela est représenté sur la FIG 2.

Dans ce mode haute pression, on remplit préliminairement les conduites d'amenées 22 et 32 formant réservoirs tampons avec leur ergol respectif A ou B issu des réservoirs d'alimentation 21, 31. Ce remplissage s'effectue à basse pression de la manière décrite plus haut.

Une fois ces volumes tampon d'ergols A et B stockés dans leur conduite d'amenée 22, 32 respective formant réservoir tampon, on ouvre les vannes 51 et 61 : dans chaque ligne 20, 30 de l'allumeur 1, du fluide haute pression F est alors alimenté à travers le clapet 53, 63 et le détendeur 42, 43, il repousse alors et ferme le clapet 52, 62 interdisant ainsi à la fois l'alimentation en ergol A, B et le refoulement du fluide haute pression F vers le réservoir d'alimentation 21, 31. Le fluide haute pression F pénètre alors dans le conduite d'amenée 22, 32 où il vient exercer une pression, à la manière d'un piston, contre le volume tampon d'ergol A, B préalablement stocké, pressuriser ce dernier et le repousser vers la chambre de combustion 10 à travers le détendeur 23, 33 et l'arrivée 12, 13.

Dans un tel mode haute pression, les quantités d'ergol A, B injectées, et donc le rapport de mélange, peuvent être réglés à loisir lors de la conception de l'allumeur 1 en réglant le volume de chaque conduite d'amenée 22, 32 formant réservoir tampon ainsi que les dispositifs de calibrage 42 et 23 côté ergol A et 43 et 23 côté ergol B pour piloter les débits d'ergols A et B et de fluide haute pression FB. Dans cet exemple de réalisation, la conduite d'amenée 22 de l'hydrogène A possède ainsi un volume d'environ 1,6 l tandis que la conduite d'amenée 32 de l'oxygène B possède un volume d'environ 0,26 l : ces volumes permettent ainsi de maintenir Un rapport de mélange d'environ 2,5 durant environ 1 seconde, durée suffisante pour permettre l'allumage.

Ainsi éjectés à haute pression, les ergols A et B se mélangent au sein de la chambre de combustion 10 et s'enflamment à l'aide d'une étincelle produite par la bougie 14. Ici encore, ce sont les flammes ainsi produites et dirigées vers la chambre de combustion 2 du moteur-fusée à travers le canal 15 de l'allumeur 1 qui permettent d'allumer la réaction de combustion du moteur-fusée.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention, telle qu'elle est définie dans les revendications.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation. Tout ceci étant entendu dans les limites des revendications.

## Revendications

1. Allumeur bimodal pour moteur-fusée apte à fonctionner en régime basse pression ou en régime haute pression, **caractérisé en ce qu'**il comprend
une alimentation (21) basse pression en un premier ergol (A), inférieure à 4 bars,
une alimentation (31) basse pression en un deuxième ergol (B), inférieure à 4 bars,
une alimentation (41) en un fluide haute pression (F),
un premier réservoir tampon (22),
un deuxième réservoir tampon (32),
un premier dispositif de commutation (50),
un deuxième dispositif de commutation (60), et
une chambre de combustion formant torche (10),
**en ce qu'**un orifice aval du premier réservoir tampon (22) d'une part et un orifice aval du deuxième réservoir tampon (32) d'autre part débouchent dans la chambre de combustion (10),
**en ce que** le premier dispositif de commutation (50), respectivement le deuxième dispositif de commutation (60), est configuré pour connecter un orifice amont du premier réservoir tampon (22), respectivement un orifice amont du deuxième réservoir tampon (32), avec soit, dans un mode de fonctionnement basse pression, l'alimentation (21) en premier ergol (A), respectivement l'alimentation (31) en deuxième ergol (B), soit, dans un mode de fonctionnement haute pression, l'alimentation (41) en fluide haute pression (F), et
**en ce que** les volumes respectifs du premier réservoir tampon (22) et du deuxième réservoir tampon (32) sont configurés pour maintenir, dans le mode de fonctionnement haute pression, des débits de premier ergol (A) et de deuxième ergol (B) souhaités durant une durée suffisante pour permettre l'allumage.

2. Allumeur bimodal selon la revendication 1, **caractérisé en ce que** le fluide haute pression (F) est un fluide de purge de l'allumeur (1), de préférence un fluide non réactif tel du diazote ou de l'hélium.

3. Allumeur bimodal selon la revendication 1 ou 2, **caractérisé en ce que** le premier réservoir tampon (22), respectivement le deuxième réservoir tampon (32), est une conduite d'amenée du premier ergol (A), respectivement du deuxième ergol (B), à la chambre de combustion (10) dont les volumes respectifs ont été configurés pour maintenir, dans le mode de fonctionnement haute pression, un rapport de mélange souhaité durant une durée suffisante pour permettre l'allumage.

4. Allumeur bimodal selon l'une quelconque des revendication 1 à 3, **caractérisé en ce que** le premier dispositif de commutation (50) comprend un clapet anti-retour (52) disposé en sortie de l'alimentation (21) en premier ergol (A) pour interrompre l'alimentation en premier ergol (A) lors du l'alimentation en fluide haute pression (F).

5. Allumeur bimodal selon l'une quelconque des revendications 1 à 4, **caractérisé en ce que** les alimentations (21, 31) en premier et deuxième ergols (A, B) sont les réservoirs d'ergol du moteur-fusée lui-même.

6. Allumeur bimodal selon l'une quelconque des revendications 1 à 5, **caractérisé en ce que** le fluide haute pression (F) est fourni à une pression supérieure à 10 bars, de préférence supérieure à 20 bars.

7. Procédé d'injection bimodale à basse pression ou à haute pression d'un ergol (A) dans une chambre de combustion (10), formant torche, d'un allumeur (1) d'un moteur-fusée, **caractérisé en ce qu'**il comprend les étapes suivantes :
en mode basse pression, on alimente la chambre de combustion (10) de l'allumeur (1) en ergol (A) prélevé dans un réservoir basse pression (21), dont la pression est inférieure à 4 bars ;
en mode haute pression, on stocke préalablement de l'ergol (A) dans un réservoir tampon (22) puis on injecte du fluide haute pression (F) à la suite de l'ergol (A) préalablement stocké pour pressuriser ce dernier et le refouler à haute pression vers la chambre de combustion (10).

8. Procédé selon la revendication 7, **caractérisé en ce que** le, fluide haute pression (F) est un fluide de purge de l'allumeur (1), de préférence un fluide non réactif tel du diazote ou de l'hélium.

9. Procédé selon la revendication 7 ou 8, **caractérisé en ce que** l'on utilise le volume formé par une conduite d'amenée (22) de l'ergol (A) à la chambre de combustion (10) pour constituer le réservoir tampon (22), le dimensionnement de cette dernière (22) ayant été prévu pour maintenir un débit d'ergol (A) souhaité durant une durée suffisante pour permettre l'allumage.

10. Moteur-fusée, **caractérisé en ce qu'**il comprend un allumeur (1) selon l'une quelconque des revendications 1 à 6 ou **en ce qu'**il met en oeuvre le procédé selon l'une quelconque des revendications 7 à 9.

## Patentansprüche

1. Bimodaler Zünder für ein Raketentriebwerk, der geeignet ist, im Niederdruckmodus oder im Hochdruckmodus zu funktionieren, **dadurch gekennzeichnet, dass** er umfasst:
eine Niederdruckversorgung (21) mit einem ersten Treibstoff (A) unter 4 bar,
eine Niederdruckversorgung (31) mit einem zweiten Treibstoff (B) unter 4 bar,
eine Versorgung (41) mit Hochdruckfluid (F),
einen ersten Pufferbehälter (22),
einen zweiten Pufferbehälter (32),
eine erste Umschaltvorrichtung (50),
eine zweite Umschaltvorrichtung (60), und
eine Brennkammer, die einen Brenner (10) bildet,
und dass eine stromabwärtige Öffnung des ersten Pufferbehälters (22) einerseits und eine stromabwärtige Öffnung des zweiten Pufferbehälters (32) andererseits in die Brennkammer (10) einmünden,
und dass die erste Umschaltvorrichtung (50) bzw. die zweite Umschaltvorrichtung (60) derart konfiguriert ist, dass eine stromaufwärtige Öffnung des ersten Pufferbehälters (22) bzw. eine stromaufwärtige Öffnung des zweiten Pufferbehälters (32) entweder in einem Niederdruckfunktionsmodus an die Versorgung (21) mit erstem Treibstoff (A) bzw. die Versorgung (31) mit zweitem Treibstoff (B) oder in einem Hochdruckfunktionsmodus an die Versorgung (41) mit Hochdruckfluid (F) angeschlossen wird, und
dass die jeweiligen Volumina des ersten Pufferbehälters (22) und des zweiten Pufferbehälters (32) dazu vorgesehen sind, im Hochdruckfunktionsmodus gewünschte Durchflussmengen von erstem Treibstoff (A) und zweiten Treibstoff (B) während einer ausreichenden Dauer aufrechtzuerhalten, um die Zündung zu ermöglichen.

2. Bimodaler Zünder nach Anspruch 1, **dadurch gekennzeichnet, dass** das Hochdruckfluid (F) ein Reinigungsfluid des Zünders (1), vorzugsweise ein nicht reaktives Fluid, wie Distickstoff oder Helium, ist.

3. Bimodaler Zünder nach Anspruch 1 oder 2, **dadurch gekennzeichnet, dass** der erste Pufferbehälter (22) bzw. der zweite Pufferbehälter (32) eine Zuleitung des ersten Treibstoffes (A) bzw. des zweiten Treibstoffes (B) zu der Brennkammer (10) ist, deren jeweilige Volumina derart konfiguriert wurden, um im Hochdruckfunktionsmodus ein gewünschtes Mischverhältnis während einer ausreichenden Dauer aufrechterhalten wird, um die Zündung zu ermöglichen.

4. Bimodaler Zünder nach einem der Ansprüche 1 bis 3, **dadurch gekennzeichnet, dass** die erste Umschaltvorrichtung (50) eine Rückschlagklappe (52) umfasst, die am Ausgang der Versorgung (21) mit erstem Treibstoff (A) angeordnet ist, um die Versorgung mit ersten Treibstoff (A) bei der Versorgung mit Hochdruckfluid (F) zu unterbrechen.

5. Bimodaler Zünder nach einem der Ansprüche 1 bis 4, **dadurch gekennzeichnet, dass** die Versorgungen (21, 31) mit erstem und zweitem Treibstoff (A, B) die Treibstoffbehälter des Raketentriebwerks selbst sind.

6. Bimodaler Zünder nach einem der Ansprüche 1 bis 5, **dadurch gekennzeichnet, dass** das Hochdruckfluid (F) mit einem Druck über 10 bar, vorzugsweise über 20 bar, geliefert wird.

7. Verfahren zur bimodalen Niederdruck- oder Hochdruckeinspritzung eines Treibstoffes (A) in eine Brennkammer (10), die einen Brenner bildet, eines Zünders (1) eines Raketentriebwerks, **dadurch gekennzeichnet, dass** es die folgenden Schritte umfasst:
im Niederdruckmodus Versorgung der Brennkammer (10) des Zünders (1) mit Treibstoff (A), der einem Niederdruckbehälter (21) entnommen wurde, dessen Druck niedriger als 4 bar ist;
im Hochdruckmodus vorheriges Speichern des Treibstoffes (A) in einem Pufferbehälter (22), dann Einspritzen des Hochdruckfluids (F) nach dem vorher gespeicherten Treibstoff (A), um diesen letztgenannten unter Druck zu setzen und ihn mit Hochdruck zu der Brennkammer (10) zu befördern.

8. Verfahren nach Anspruch 7, **dadurch gekennzeichnet, dass** das Hochdruckfluid (F) ein Reinigungsfluid des Zünders (1), vorzugsweise ein nicht reaktives Fluid wie Distickstoff oder Helium, ist.

9. Verfahren nach Anspruch 7 oder 8, **dadurch gekennzeichnet, dass** das Volumen, das von einer Zuleitung (22) des Treibstoffes (A) zu der Brennkammer (10) gebildet ist, verwendet wird, um den Pufferbehälter (22) zu bilden, wobei die Dimensionierung dieser letztgenannten (22) dazu vorgesehen ist, eine gewünschte Treibstoffmenge (A) während einer ausreichenden Dauer aufrechtzuerhalten, um die Zündung zu ermöglichen.

10. Raketentriebwerk, **dadurch gekennzeichnet, dass** es einen Zünder (1) nach einem der Ansprüche 1 bis 6 umfasst, oder dass es das Verfahren nach einem der Ansprüche 7 bis 9 einsetzt.

## Claims

1. A two-mode ignitor for a rocket engine suitable for operating at low pressure or at high pressure, **characterized in that** it comprises:
a low pressure feed (21) for feeding a first propellant (A), lower than 4 bar ;
a low pressure feed (31) for feeding a second propellant (B), lower than 4 bar ;
a feed (41) for feeding a high pressure fluid (F);
a first buffer tank (22);
a second buffer tank (32);
a first switch device (50);
a second switch device (60); and
a torch-forming combustion chamber (10);
**in that** a downstream orifice from the first buffer tank (22) on the one hand and a downstream orifice from the second buffer tank (32) on the other hand open out into the combustion chamber (10);
**in that** the first switch device (50), respectively the second switch device (60), is configured to connect an upstream orifice of the first buffer tank (22), respectively un upstream orifice of the second buffer tank (32), with either, in a low pressure operation, the feed (21) for feeding the first propellant (A), respectively the feed (31) for feeding the second propellant (B), either, in a high pressure operation, the feed (41) for feeding the high pressure fluid (F); and
**in that** the respective volumes of the first buffer tank (22) and of the second buffer tank (32) are configured so that during high pressure operation the desired flow rates of the first propellant (A) and of the second propellant (B) are maintained for a duration that is sufficient to enable ignition.

2. A two-mode ignitor according to claim 1, **characterized in that** the high pressure fluid (F) is a purge fluid for the ignitor (1), preferably a non-reactive fluid such as dinitrogen or helium.

3. A two-mode ignitor according to claim 1 or 2, **characterized in that** the first buffer tank (22), respectively the second buffer tank (32), is a feed pipe for feeding the first propellant (A), respectively de second propellant (B), to the combustion chamber (10), whose respective volumes have been configured so that, during high pressure operation, a desired mixing ratio is maintained for a duration that is sufficient to enable ignition.

4. A two-mode ignitor according to any one of claims 1 to 3, **characterized in that** the first switch device (50) includes a check valve (52) arranged at the outlet from the feed (21) for feeding the first propellant (A) in order to interrupt the feed of first propellant (A) when feeding high pressure fluid (F).

5. A two-mode ignitor according to any one of claims 1 to 4, **characterized in that** the feeds (21, 31) for feeding the first and second propellants (A, B) are the propellant tanks of the rocket engine itself.

6. A two-mode ignitor according to any one of claims 1 to 5, **characterized in that** the high pressure fluid (F) is delivered at a pressure higher than 10 bar, preferably higher than 20 bar.

7. A method of two-mode injecting at low pressure or high pressure of a propellant (A) into a combustion chamber (10), forming a torch, of a rocket engine ignitor (1), **characterized in that** it comprises the following steps:
in low pressure mode, feeding the combustion chamber (10) of the ignitor (1) with propellant (A) taken from a low pressure tank (21); whose pressure is less than 4 bar ;
in high pressure mode, previously storing the propellant (A) in a buffer tank (22) and then injecting high pressure fluid (F) after the previously stored propellant (A) in order to pressurize the propellant and expel it at high pressure to the combustion chamber (10).

8. A method according to claim 7, **characterized in that** the high pressure fluid (F) is a purge fluid for the ignitor (1), preferably a non-reactive fluid such as dinitrogen or helium.

9. A method according to claim 7 or claim 8, **characterized in that** use is made of the volume formed by a feed pipe (22) for feeding the propellant (A) to the combustion chamber (10) in order to constitute the buffer tank (22), the dimensioning of the buffer tank (22) being designed to maintain a desired flow rate of propellant (A) for a duration that is sufficient to enable ignition.

10. A rocket engine, **characterized in that** it includes an ignitor (1) according to any one of claims 1 to 6 or **in that** it performs the method according to any one of claims 7 to 9.
